# EUROPEAN PATENT APPLICATION

(11) **EP 3 413 088 A1**
(43) Date of publication of application: **12.12.2018**
(21) Application number: 17749942.3
(22) Date of filing: 04.02.2017
(51) Int. Cl.: G01S 19/13

(54) **MULTI-CHANNEL MULTI-SYSTEM RADIO FREQUENCY UNIT OF A SATELLITE NAVIGATION RECEIVER**

(30) Priority: 05.02.2016 EA 2016003
(71) Applicant: Tcherniakovski, Nikolai, Minsk 220007 (BY); Obshchestvo S Ogranichennoy Otvetstvennostyu "NTLAB-SC", Moscow 124498 (RU)
(72) Inventor: ANTONOV, Igor, Minsk 220125 (BY); KOLOTKIN, Andrei, Minsk 220039 (BY)
(74) Representative: Anohins, Vladimirs
(86) International application number: PCT/IB2017/050623
(87) International publication number: WO 2017/137878

(57) **Abstract**

The invention relates to multisystem radio-frequency units of navigational satellite receivers and may be used for the simultaneous reception of any combination of navigation signals from multiple navigation systems: GLONASS, GPS, Galileo, BeiDou, IRNSS and QZSS.

The unit made based on the "system-on-chip" technology comprises four identical independently configurable reception channels with a high degree of isolation from interpenetration of a signal and contaminating signals, two heterodyne frequency synthesizers having a single heterodyne signal generation mode for all four channels, a quadrature heterodyne signal driver for quadrature mixers and an automatic intermediate frequency filter band calibration system.

Each reception channel comprises a quadrature mixer with image channel suppression adapted to select an upper or lower stop band, and a digital-to-analog automatic intermediate frequency gain control system.

When the claimed unit operates, any reference frequency from the specified band is used for receiving the signal, as well as any conversion frequency from the specified band for quadrature mixers.

The clock frequency for a correlator is obtained from the heterodyne frequency generated by any of two integrated frequency synthesizers.

## Description

The invention relates to the multisystem radio-frequency units of a navigational satellite receiver (NSR) and may be used for simultaneous reception of navigation signals from multiple navigation systems: Global Navigation Satellite System of Russia (GLONAS), US Global Positioning System (GPS), Global Navigation Satellite System of the European Union and European Space Agency (Galileo), China's Navigation Satellite System (BeiDou/COMPASS), India's Regional Navigation Satellite System (IRNSS) and Japan's Regional Navigation Satellite System (QZSS).

It is known that a simultaneous use of multiple systems by the navigator reduces the position coordinate error. In addition, "hybrid" navigators "see" simultaneously more satellites than the devices capable of operating only with one of the systems that provides a higher reception reliability [1], [2].

A multisystem navigational satellite receiver comprising a power divider, a radio-frequency channel convertor, a 10 MHz-frequency heterodyne reference signal source, a power supply unit, a signal processing module and an input-output interface module is known from the prior art [3].

A multisystem signal receiver (CN202533579U) comprising a radio-frequency unit, a radio-frequency channel convertor, a heterodyne reference signal source, a signal processing module capable of simultaneously receiving a signal from four different navigational satellite systems in a wide frequency spectrum - GPS, GLONASS, BeiDou-1 and BeiDou-2 [4] is also known from the prior art.

The disadvantage of the above signal receivers is that they are provided with a single common signal input and also that a fixed channel is provided for each of the used navigational satellite systems, thereby limiting the quantity of possible combinations of the to-be processed signals from the navigational satellite systems.

A multimode multi-frequency receiver of the navigational satellite system is known from the prior art. The device comprises a low-noise amplifier, a power divider and multiple radio-frequency signal processing circuits, including the first serially connected SHF key, multiple band filters, the second SHF key, a highfrequency low-noise amplifier, a mixer, an intermediate frequency filter, an amplifier and an automatic gain control system [5].

The disadvantage of this signal receiver is that it also comprises a single common input for signals from four channels, each of which is divided into fixed signal ranges, and that it also uses a separate synthesizer for each channel.

The claimed multichannel multisystem radio-frequency unit is configured to optimize the operation of the users' receiving devices when they are located at any point of the Earth space, increase accuracy of determining the location of receiving devices while maintaining the compactness of these devices and to reduce energy consumption of receiving devices.

The claimed multichannel multisystem radio-frequency unit of the navigational satellite receiver made based on the "system-on-chip" technology which uses the receive path structure with one input signal frequency conversion is designed for the simultaneous operation with combination of signals of the navigation satellite systems, including the Global Navigation Satellite System of Russia (GLONAS), US Global Positioning System (GPS), Global Navigation Satellite System of the European Union and European Space Agency (Galileo), China's Navigation Satellite System (BeiDou/COMPASS), India's Regional Navigation Satellite System (IRNSS) and Japan's Regional Navigation Satellite System (QZSS), each channel of which comprises a low-noise amplifier the output of which is connected with the input of a quadrature mixer with suppression of the image channel serially connected with an intermediate frequency filter with the adjustable passband the output of which is connected to the input of the intermediate frequency gain control amplifier a signal from which is supplied to the inputs of the output line buffer and two-bit analog-to-digital converter with thresholding the output of which is connected with an analog-to-digital output signals detector having the digital-to-analog converter to control the gain of the intermediate frequency amplifier comprising an automatic intermediate frequency filter band calibration system, two frequency synthesizers with phase-lock-loop frequency control each of which comprises a voltage controlled generator coupled to a prescaler the signal from which is supplied to the input of two serially connected dividers to form the clock frequency of correlators and to the divider integrated into the phase lock loop connected to the input of a frequency-phase detector to the second input of which a signal from the reference frequency divider is supplied to form a comparison frequency, while the output is connected to the frequency synthesizer filter, a quadrature heterodyne signal driver for quadrature mixers and also a power supply module equipped with a voltage stabilizer for each functional unit, a crystal temperature sensor, a serial interface to control modes of operation of components and configuration of the entire multichannel multisystem radio-frequency unit.

Multichannel multisystem radio-frequency unit navigational satellite receiver comprises four identical independently configurable reception channels with a high degree of isolation from interpenetration of a signal and contaminating signals.

Device inputs and outputs are located symmetrically in relation to the housing corners to provide housing parasitics delay similarity.

One of heterodyne frequency synthesizers is used as a heterodyne signal source for the first and second receiving channels while the other is used as a heterodyne signal source for the third and fourth receiving channels, with the common heterodyne signal generation mode for all four channels being available.

When the claimed multichannel multisystem radio-frequency unit of the navigational satellite receiver is on operation, while receiving a signal a random reference frequency from the specified band and also a random conversion frequency from the specified band is used for the quadrature mixers in relation to which the combined spectrum of signals of all navigation systems may be located both symmetrically and asymmetrically.

A low-noise amplifier is equipped with an automatic gain control system at the input of each reception channel.

A quadrature mixer with image channel suppression in each reception channel is adapted to select an upper or lower stop band.

The multichannel multisystem radio-frequency unit of the navigational satellite receiver comprises an intermediate frequency amplifier with digital-to-analog intermediate frequency gain control.

In addition, the clock frequency for correlators is obtained from the heterodyne frequency generated by any of two integrated frequency synthesizers.

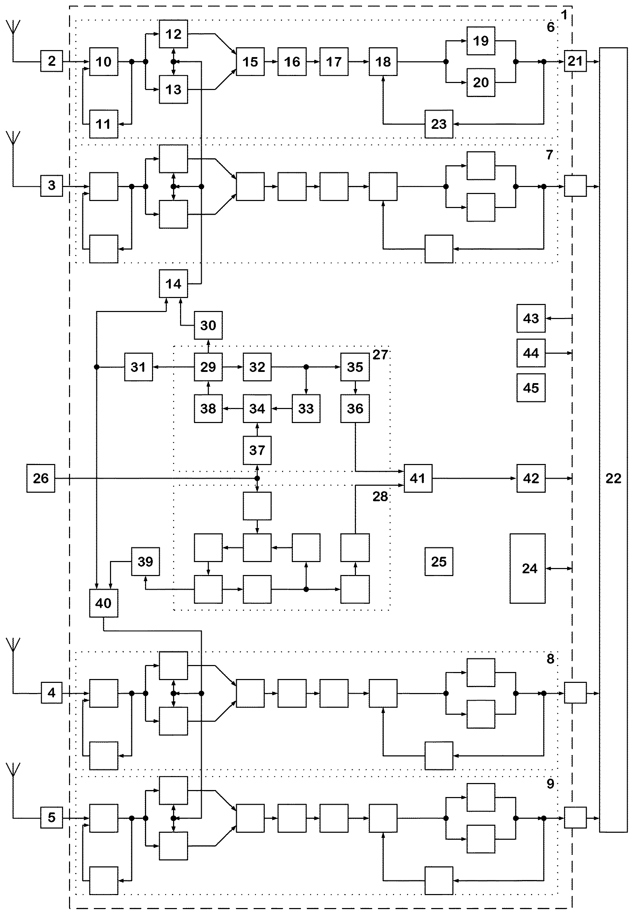

The Figure shows the claimed development in which a block diagram of the provided multisystem radio-frequency unit of the navigational satellite receiver made based on "system-on-chip" technology is illustrated.

As is seen from the Figure, the radio-frequency unit 1 has outputs 2, 3, 4 and 5 for connecting the GPS/GLONASS/Galileo/BeiDou/IRNSS/QZSS antenna module for each reception channel 6, 7, 8 and 9 respectively. Via an output 2, the antenna module is connected to the input of the low-noise amplifier 10 equipped with an automatic gain control system (AGC) 11 the output of which is connected to the input of the quadrature mixer with the stop band selection, comprising mixers 12 and 13, to which quadrature heterodyne signals arrive from the quadrature heterodyne signal driver 14 and a polyphase filter (phase shifter-summator) 15. The output of the polyphase filter 15 is connected to the input of a buffer of the mixer 16, the output of which is connected to the intermediate frequency filter with the tunable passband 17. The output of the filter 17 is connected to the input of the intermediate frequency amplifier (IFA) 18. The output of the IFA 18 is connected to inputs of a differential analog buffer 19 and an analog-to-digital converter (ADC) 20, the outputs of which are connected to the output 21 via which analog or digital signals from navigational systems arrive to an external correlator 22. The output analog and digital signals of the intermediate-frequency section (IF) are detected by a detector 23 capable of setting a detection level from an integrated digital-to-analog converter (not shown) the code for which is specified via a serial interface unit 24. The output control signal of the detector 23 arrives to the gain control input of the IFA 18 forming the AGC system of the IFA. The AGC of the IF section may operate in the following multiple modes:
- with line differential outputs, with AGC operating on output line signals,
- with digital outputs from an integrated two-digit analog-to-digital converter (ADC) 20 the threshold of which is set via the serial interface 24, while the signal for the detector 23 of the AGC system is supplied from the output of the IFA 18,
- with digital outputs from an integrated two-digit ADC 20, with the signal for the detector 23 of the AGC system is supplied from the output of the ADC 20, while the detection threshold is set using an integrated DAC via the serial interface 24 so that an integrated percent of gain in the magnitude digital signals equals a direct or additional code set at the integrated DAC.

The logic one level may be programmed for digital outputs via the serial interface 24 and also the output voltage swing may be programmed for differential outputs.

Channels 7, 8 and 9 are identical to channel 6.

The IF filter passband is automatically tuned with the lock loop system 25 using the frequency from the external reference generator 26 as a reference frequency when the radio-frequency unit is energized. The IF filter passband may be changed, if required, by setting a respective code via the serial interface 24 and the start of the lock loop system may be also initiated. Each filter may have an individually programmed passband. In this case, upon starting the autocalibration system, the logical automation will apply correction codes according to the specified passband.

The radiofrequency unit comprises two frequency synthesizers 27 and 28. The frequency synthesizer 27 comprises a voltage-controlled generator (VCG) 29 the differential output of which is connected to the inputs of the quadrature heterodyne signal drivers 30 and 31 and a VCG frequency divider 32 generating a clock signal used for operation of the external correlator 22. The output of the VCG frequency divider 32 is connected to the input of a frequency divider 33 generating the VCG divided frequency supplied to the frequency-phase detector (FPD) 34 and to the input of the divider 35 the output of which is connected to the input of the divider 36. A comparison frequency signal generated by the divider of the reference frequency 37 supplied from the output of the external reference generator 26 is fed to the second input of the FPD 34. The output of the FPD 34 is connected to the input of the integrated filter 38 of the frequency synthesizer 27 with a phase-locked loop (PLL). The output of the filter 38 is connected to the control input of the VCG 29. Division ratios of dividers 32, 33 and 37 are programmed via a serial interface 24. The band of the frequency synthesizer 27 may be tuned by controlling the filter 38 the element parameters of which are set via the serial interface 24. The VCG 29 comprises an automatic sub-band tuning system when the multichannel multisystem radio-frequency unit of the navigational satellite receiver is energized or when a respective command is issued via the serial interface 24.

The frequency synthesizer 28 is similar to the frequency synthesizer 27. The distinction consists in that the signal from the differential output of the VCG 29 is supplied not to two quadrature heterodyne signal drivers, but to one quadrature heterodyne signal driver 39.

The following operation modes are implemented using switches 14 and 40:
- the frequency synthesizer 27 generates a heterodyne signal for channels 6 and 7 and the frequency synthesizer 28 - for channels 8 and 9,
- the frequency synthesizer 27 generates a common heterodyne signal for all four reception channels.

A multiplexer 41 is used to select the source of the correlator 22 clock frequency which is obtained from the heterodyne frequency generated by any of the frequency synthesizers. The multiplexer 41 output is connected to the amplifier 42 input.

A receive path shown in the Figure of the multichannel multisystem radio-frequency unit of the navigational satellite receiver is formed based on the diagram with a single conversion with low IF. A common external antenna unit is used for all channels, and the former supplies signals arriving to four independent identical channels each of which comprises a low-noise amplifier equipped with the automatic gain control system, a quadrature mixer with image channel suppression adapted to select a stop band (higher or lower than heterodyne frequency), an intermediate frequency filter with tunable passband, an intermediate frequency gain control amplifier, an output line buffer, a two-bit analog-to-digital converter with thresholding, an analog/digital output signals detector, a digital-to-analog converter to control the gain of the intermediate frequency amplifier via the serial interface that provides versatility of use thereof. To convert signals of all navigational systems, one common or two different quadrature heterodyne signal sources generated using completely integrated frequency synthesizers are used.

The receive path from outputs of the quadrature mixers to the IF outputs may be configured in a different manner via the serial interface that allows interference immunity to be specifically improved.

Signals from the outputs of quadrature mixers are supplied to the broad band phase shifter-summators which shift the phase of output signals from quadrature mixers in the broad frequency band and sum them up. In this case, a desired signal is summed up in phase, while an image signal in relation to the desired one - in phase opposition. Phase shifter-summators are structured based on the identical scheme, but connected to outputs of common quadrature mixers so that only a portion of the spectrum higher (lower) than the heterodyne frequency arrives to the output of one phase shifter-summator. Therefore, the interference in the portion of the spectrum lower (higher) than the heterodyne frequency will be suppressed at the phase shifter-summator output. In this case, the narrowband interference will not simultaneously block signal reception by all systems of the multisystem navigational satellite receiver (SNR) made using the radio-frequency unit subject to the claimed utility model which improves positioning validity under complicated reception conditions, i.e. improves interference immunity of the navigational satellite receiver.

Voltage stabilizers 43 for functional units of each channel (HF portion, IF portion) and synthesizers are configured to form a stabilized voltage source and electric insulation.

In addition, the device comprises a reference current and voltage source 44 and a crystal temperature sensor 45.

Prototypes of the multichannel multisystem radio-frequency unit of the navigational satellite receiver designed based on the "system-on-chip" technology are made using a design documentation of "NTLab-SYSTEMS" CJSC and assembled in a QFN-type 88-pin package with a pin pitch of 0.4 mm and the following package dimensions: length - 10 mm, width - 10 mm, height - 0.85 mm.
1. http://www.nis-glonass.ru/about-glonass/gps/
2. http://cyberleninka.ru/article/n/metod-isklyucheniya-oshibok-opredeleniya-mestopolozheniya-pri-odnovremennom-ispolzovanii-navigatsionnyh-sistem
3. China Patent CN 203224629 U, priority 02.10.2013, https://patents.google.com/patent/CN203224629U/en
4. China Patent CN 202533579 U, priority 14.11.2012, https://patents.google.com/patent/CN202533579U/en
5. China Patent CN 103117767 A, priority 22.05.2013, https://patents.google.com/patent/CN103117767B/en

## Claims

1. A multichannel multisystem radio-frequency unit of a navigational satellite receiver made based on "system-on-chip" technology which uses the receive path structure with one input signal frequency conversion designed for the simultaneous operation with combination of signals of the navigation satellite systems, including the Global Navigation Satellite System of Russia (GLONAS), US Global Positioning System (GPS), Global Navigation Satellite System of the European Union and European Space Agency (Galileo), China's Navigation Satellite System (BeiDou/COMPASS), India's Regional Navigation Satellite System (IRNSS) and Japan's Regional Navigation Satellite System (QZSS), each channel of which comprises a low-noise amplifier the output of which is connected to an input of a quadrature mixer with suppression of an image channel serially connected with an intermediate frequency filter with a tunable passband the output of which is connected to an input of an intermediate frequency gain control amplifier a signal from which is supplied to the inputs of the output line buffer and two-bit analog-to-digital converter with thresholding the output of which is connected to an analog/digital output signal detector having the digital-to-analog converter to control the gain of the intermediate frequency gain control amplifier and also comprising an automatic intermediate frequency filter band calibration system, two frequency synthesizers with phase-lock-loop frequency control each of which comprises a voltage controlled generator coupled to a prescaler the signal from which is supplied to the input of two serially connected dividers to form a clock frequency of correlators and to the divider integrated into the phase lock loop connected to the input of a frequency-phase detector to a second input of which a signal from a reference frequency divider is supplied to form a comparison frequency, while the output is connected to the frequency synthesizer filter, a heterodyne quadrature signal driver for quadrature mixers and also a power supply module equipped with a voltage stabilizer for each functional unit, a crystal temperature sensor, a serial interface to control modes of operation of components and configuration of the entire multichannel multisystem radio frequency unit.

2. The multichannel multisystem radio-frequency unit of the navigational satellite receiver according to claim 1, **characterized in that** it comprises four identical independently configurable reception channels with a high degree of isolation from interpenetration of a signal and contaminating signals.

3. The multichannel multisystem radio-frequency unit of the navigational satellite receiver according to claim 1 or claim 2, **characterized in that** inputs and outputs are located symmetrically in relation to housing corners to provide housing parasitics delay similarity.

4. The multichannel multisystem radio-frequency unit of the navigational satellite receiver according to claim 1, 2 or 3, **characterized in that** it comprises two heterodyne frequency synthesizers one of which is used as heterodyne signal source for the first and second receiving channels while the other is used as heterodyne signal source for the third and fourth receiving channels, with the common heterodyne signal generation mode for all four channels being available.

5. The multichannel multisystem radio-frequency unit of the navigational satellite receiver according to claim 1, 2, 3 or 4, **characterized in that** while receiving a signal, a random reference frequency from the specified band and also a random conversion frequency from the specified band for the quadrature mixers is used in relation to which the combined spectrum of signals of all navigation systems may be located both symmetrically and asymmetrically.

6. The multichannel multisystem radio-frequency unit of the navigational satellite receiver according to claim 1, 2, 3, 4 or 5, **characterized in that** it comprises a low-noise amplifier having an automatic gain control system at the input of each reception channel.

7. The multichannel multisystem radio-frequency unit of the navigational satellite receiver according to claim 1, 2, 3, 4, 5 or 6, **characterized in that** it comprises a quadrature mixer with image channel suppression in each reception channel adapted to select an upper or lower stop band.

8. The multichannel multisystem radio-frequency unit of the navigational satellite receiver according to claim 1, 2, 3, 4, 5, 6 or 7, **characterized in that** it comprises an intermediate frequency amplifier with digital/analog gain control.

9. The multichannel multisystem radio-frequency unit of the navigational satellite receiver according to claim 1, 2, 3, 4, 5, 6, 7 or 8, **characterized in that** the clock frequency for the correlator is obtained from the heterodyne frequency generated by any of two integrated frequency synthesizers.
